# EUROPEAN PATENT APPLICATION

(11) **EP 3 637 809 A1**
(43) Date of publication of application: **15.04.2020**
(21) Application number: 17927576.3
(22) Date of filing: 26.09.2017
(51) Int. Cl.: H04W 8/00

(54) **SYSTEM INFORMATION VALIDITY INDICATION METHOD, NETWORK DEVICE AND TERMINAL DEVICE**

(71) Applicant: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN)
(74) Representative: Manitz Finsterwald Patent- und Rechtsanwaltspartnerschaft mbB
(86) International application number: PCT/CN2017/103503
(87) International publication number: WO 2019/061028

(57) **Abstract**

Provided are a method for indicating validity of System Information (SI), a network device, a terminal device and a computer storage medium. The method includes that: at least one validity indication for at least one SI Block (SIB) is configured; and the validity indication for an SIB to be reacquired is transmitted to a terminal device.

## Description

### TECHNICAL FIELD

The disclosure relates to the technical field of information processing, and particularly to a method for indicating validity of System Information (SI), a network device, a terminal device and a computer storage medium.

### BACKGROUND

In an existing 5th-Generation (5G) New Radio (NR) system, SI includes Minimum SI (MSI) and other SI. The MSI is included in a Synchronization Signal (SS) block through default broadcast, and each beam may include a piece of MSI. The other SI is transmitted by on-demand broadcast or unicast, namely transmitted through dedicated Radio Resource Control (RRC) signaling. The other SI may include multiple independent SI Blocks (SIBs), each independent SIB may be or may not be broadcast, and a value of each SIB may change independently. Under an LTE SI broadcast mechanism, a terminal monitors information of a Master Information Block (MIB) and SIB 1 on a specific time-frequency resource after acquiring a downlink SS from a Primary Synchronization Signal (PSS) and a Secondary Synchronization Signal (SSS), and then acquires scheduling information of other SIBs from the SIB 1. However, an existing LTE SI mechanism cannot be adapted to a mechanism which enables an SIB to be acquired flexibly on demand by an NR system.

### SUMMARY

For solving the technical problem, embodiments of the disclosure provide methods for indicating validity of SI, a network device, a terminal device and a computer storage medium.

An embodiment of the disclosure provides a method for indicating validity of SI, which may be applied to a network device and include the following operations:
a validity indication is configured for at least one SIB; and
the validity indication for an SIB to be reacquired is transmitted to a terminal device.

An embodiment of the disclosure provides a method for indicating validity of SI, which may be applied to a terminal device and include the following operations:
a validity indication, transmitted by a network side, for an SIB to be reacquired is detected, the validity indication being for at least one SIB;
the SIB is reacquired based on the validity indication.

An embodiment of the disclosure provides a network device, which may include a first processing unit and a communication unit.

The first processing unit may be configured to configure a validity indication for at least one SIB.

The communication unit may be configured to transmit the validity indication for an SIB to be reacquired to a terminal device.

An embodiment of the disclosure provides a terminal device, which may include a detection unit and a second processing unit.

The detection unit may be configured to detect a validity indication, transmitted by a network side, for an SIB to be reacquired, the validity indication being for at least one SIB.

The second processing unit may be configured to reacquire the SIB based on the validity indication.

An embodiment of the disclosure provides a network device, which may include a processor and a memory configured to store a computer program capable of running in the processor.

The processor may be configured to run the computer program to execute the steps of the above-mentioned method.

An embodiment of the disclosure provides a terminal device, which may include a processor and a memory configured to store a computer program capable of running in the processor.

The processor may be configured to run the computer program to execute the steps of the above-mentioned method.

An embodiment of the disclosure provides a computer storage medium, which may store a computer-executable instruction, the computer-executable instruction being executed to implement the steps of the above-mentioned methods.

According to the technical solutions of the embodiments of the disclosure, a validity indication may be configured for at least one SIB, so that a system may support a scenario that multiple SIBs may be indicated by a same validity indication and may further be adapted to a system mechanism of flexibly acquiring an SIB on demand.

### BRIEF DESCRIPTION OF DRAWINGS

FIG. 1 is a first flowchart of a method for indicating validity of SI according to an embodiment of the disclosure.
FIG. 2 is a first schematic diagram of configuring a validity indication according to an embodiment of the disclosure.
FIG. 3 is a second schematic diagram of configuring a validity indication according to an embodiment of the disclosure.
FIG. 4 is a third schematic diagram of configuring a validity indication according to an embodiment of the disclosure.
FIG. 5 is a second flowchart of a method for indicating validity of SI according to an embodiment of the disclosure.
FIG. 6 is a structure diagram of composition of a network device according to an embodiment of the disclosure.
FIG. 7 is a structure diagram of composition of a terminal device according to an embodiment of the disclosure.
FIG. 8 is a schematic diagram of a hardware architecture according to an embodiment of the disclosure.

### DETAILED DESCRIPTION

For making the characteristics and technical contents of the embodiments of the disclosure understood in more detail, implementation of the embodiments of the disclosure will be described below in combination with the drawings in detail. The drawings are only adopted for description as references and not intended to limit the embodiments of the disclosure.

### Embodiment 1

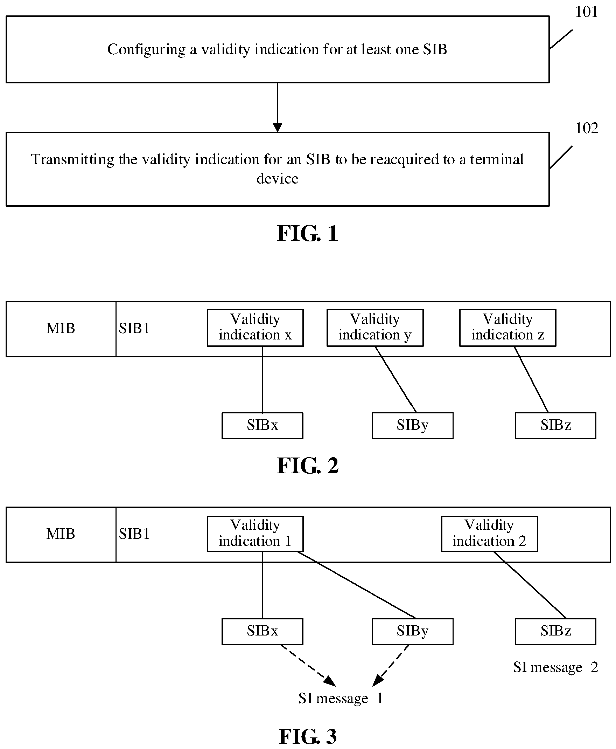

The embodiment of the disclosure provides a method for indicating validity of SI, which is applied to a network device and, as shown in FIG. 1, includes the following operations.

In the operation 101, a validity indication for at least one SIB is configured.

In the operation 102, the validity indication for an SIB to be reacquired is transmitted to a terminal device.

Here, the network device in the embodiment may be a base station on a network side, which for example, may be an Evolved Node B (eNB) or a gNB. Based on the above operations, the base station may configure a validity indication is for one or more SIBs, so that a terminal may detect a change in the validity indication to determine whether an SIB is needed to be reacquired or not. These SIBs may be located in the same or different SI messages.

Specifically, configuring the validity indication for the at least one SIB may refer to configuring one validity indication for one or more SIBs respectively, that is, the same validity indication may correspond to at least one SIB. For example, if there are totally eight SIBs, each SIB may be provided with one validity indication, or each of seven or fewer SIBs therein may be provided with one validity indication, and moreover, a same validity indication may be used for part of the SIBs.

Furthermore, the validity indication may be a finite set of positive integers, for example, 1-16 or 1-32.

A change in a value of the validity indication means that an SIB is not valid anymore and is required to be reacquired by the terminal. That is, upon when a certain SIB is not valid anymore, the network side can make the terminal device learn about whether an SIB is needed to be reacquired or not by transmitting a validity indication to the terminal device through a system message.

It may be understood that the embodiment may further include that validity indications configured for all SIBs are transmitted to the terminal device. In such a manner, the terminal device and the network side can have the same validity indications for the corresponding SIBs and thus learn about whether the corresponding SIBs have gotten invalid or not only by reading the validity indications.

The position of a validity indication is described in the embodiment as follows: the validity indication for an SIB to be reacquired is placed in MSI in a centralized or distributed manner and transmitted to the terminal device to instruct the terminal device to reacquire the SIB.

That is, multiple SI validity indications may be placed in the MSI in a centralized manner (the MSI includes an MIB and Remaining MSI (RMSI)).

Specifically, the validity indication for the SIB to be reacquired may be placed in SIB 1 in the MSI in the centralized manner. For example, RMSI may include SIB 1 or SIB 2, and the validity indication may be in the SIB 1. The validity indication may also be placed in different SIBs in a distributed manner. In an example, all the validity indications of multiple SIBs may be placed in the SIB 1, and thus User Equipment (UE) may learn whether an SIB is needed to be reacquired or not upon acquiring the MSI.

In addition, the validity indication for the at least one SIB may be configured in the following manners.

Manner 1: a validity indication is configured for each of at least one SIB other than the SIB 1.

That is, a system value tag is independently defined for an SIB in a single piece of other SI. This method is flexible, but a larger capacity may be required for the RMSI/SIB 1. For example, if a system value tag needs five bits, then eight pieces of other SI may need 40 bits. An NR system has a larger capacity than an LTE system, therefore, 40 bits may be acceptable in the SIB 1. However, if there are more SIBs of other SI, more bits may be occupied. Therefore, other solutions need to be considered. Referring to FIG. 2, a scenario that one validity indication corresponds to one SIB is shown in the figure.

Manner 2: at least part of SIBs are selected from the at least one SIB other than the SIB 1, and a same validity indication is configured for the at least part of SIBs.

The operation that the at least part of SIBs are selected from the at least one SIB other than the SIB 1 may include that:
at least part of SIBs placed in the same system message are selected from the at least one SIB other than the SIB 1;
or, at least part of SIBs having the same function and/or the same service type are selected from the at least one SIB other than the SIB 1.

Validity indications may be partially shared. If the use of an independent validity indication for a single SIB may excessively increase the capacity of the SIB 1, flexible partial sharing may be adopted. Partial sharing may be implemented based on whether multiple SIBs may be placed in the same SI message or not, namely SIBs in the same SI message may share the same validity indication. For example, referring to FIG. 3, both SIB x and SIB y belongs to SI message 1 and SIB z belongs to SI message 2. In such a case, validity indication 1 may be configured for both the SIB x and the SIB y, and validity indication 2 is allocated to the SIB z.

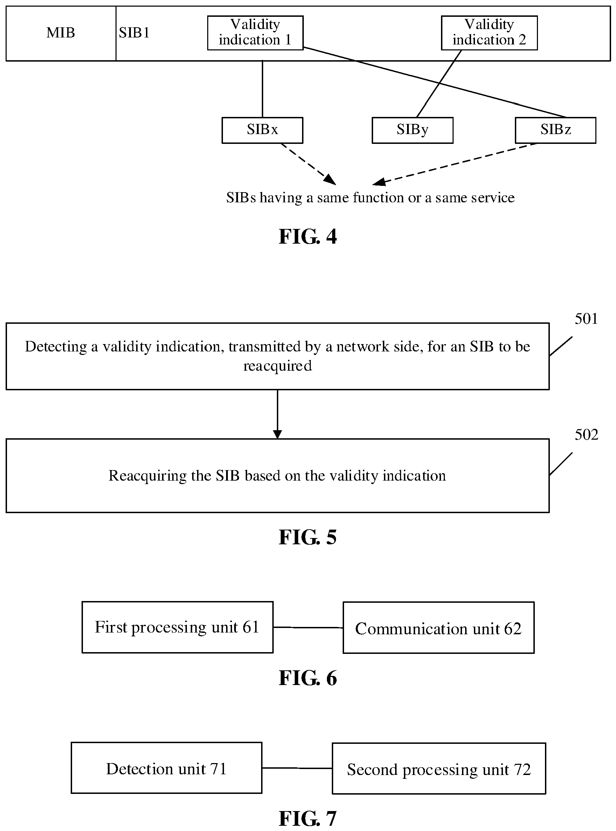

Other criteria, such as SI relativity, may also be adopted for partial sharing. For example, as shown in FIG. 4, if the SIB x and the SIB z are both required by the same service or related for the same function, a shared validity indication may be used, for example, the validity indication 1 shown in the figure; and the validity indication 2 may be used for the SIB y. For example, different SIBs related to Multimedia Broadcast Multicast Service (MBMS) and SIBs related to Device-to-Device (D2D) discovery and D2D communication may share the same validity indications. Accordingly, sharing a validity indication may result in that the validity indication may change with change of any SIB.

It may be seen that, a validity indication may be configured for at least one SIB with the above solution, so that a system may support that multiple SIBs may be indicated by the same validity indication and may further be adapted to a system mechanism of flexibly acquiring an SIB on demand.

### Embodiment 2

The embodiment of the disclosure provides a method for indicating validity of SI, which is applied to a terminal device and, as shown in FIG. 5, includes the following operations.

In the operation 501, a validity indication, transmitted by a network side, for an SIB to be reacquired is detected, the validity indication being for at least one SIB.

In the operation 502, the SIB is reacquired based on the validity indication.

Here, the network device in the embodiment may be a base station on a network side, which for example, may be an eNB or a gNB. Based on the above operations, the base station may configure a validity indication for one or more SIBs, so that a terminal may determine whether an SIB is required to be reacquired or not by detecting a change in the validity indication. These SIBs may be in the same or different SI messages.

Specifically, configuring the validity indication for the at least one SIB may refer to configuring one validity indication respectively for one or more SIBs, that is, a same validity indication may correspond to at least one SIB. If there are totally eight SIBs, one piece of validity indication information may be set for each SIB respectively; or one validity indication may be set for each of seven or fewer SIBs therein respectively, and moreover, a same validity indication may be adopted for part of the SIBs.

Furthermore, the validity indication may be a finite set of positive integers, for example, 1-16 or 1-32.

A change in a value of a validity indication means that the corresponding SIB is not valid anymore and is required to be reacquired by the terminal. That is, when an SIB is not valid anymore, the network side may enable the terminal device to learn about whether the corresponding SIB is required to be reacquired or not by transmitting a validity indication to the terminal device through a system message.

It may be understood that the embodiment further includes that validity indications configured for all SIBs are transmitted to the terminal device. Correspondingly, the terminal device acquires the validity indications configured for all the SIBs from the network side. In such a manner, the terminal device may have the same validity indications for corresponding SIBs with the network side and thus can learn about whether the corresponding SIBs have gotten invalid or not only by reading the validity indications.

A position of a validity indication in the embodiment is described as follows: the validity indication for an SIB to be reacquired is placed in MSI in a centralized or distributed manner and transmitted to the terminal device to instruct the terminal device to reacquire the SIB. Correspondingly, the terminal device detects the validity indication for the SIB to be reacquired from the MSI.

That is, multiple SI validity indications may be placed in the MSI in the centralized manner (the MSI includes an MIB and RMSI).

Specifically, the validity indication for the SIB to be reacquired may be placed in SIB 1 in the MSI in the centralized manner. For example, the RMSI may include the SIB 1 or SIB 2, and the validity indication may be in the SIB 1. The validity indication may also be placed in different SIBs in the distributed manner. In an example, validity indications of multiple SIBs may be placed in the SIB 1 in the centralized manner, and in such a manner, UE can learn about whether an SIB is required to be reacquired or not by acquiring the MSI.

In addition, configuring the validity indication for the at least one SIB may further have the following manners.

Manner 1: a validity indication is configured for each of the at least one SIB other than the SIB 1.

That is, a system value tag is independently defined for an SIB in a single piece of other SI. This method is flexible, but an increased capacity of the RMSI/SIB 1 may be involved. For example, if the system value tag needs five bits, then eight pieces of other SI need 40 bits. An NR system has a capacity larger than an LTE system, 40 bits may be acceptable in the SIB 1. However, if there are more SIBs of other SI, more bits may be occupied. Therefore, other solutions need to be taken into considered. Referring to FIG. 2, a scenario that one validity indication corresponds to one SIB is shown in the figure.

Manner 2: at least part of SIBs are selected from the at least one SIB other than the SIB 1, and a same validity indication is configured for the at least part of SIBs.

The operation that the at least part of SIBs are selected from the at least one SIB other than the SIB 1 may include the following operation:
at least part of SIBs in the same system message are selected from the at least one SIB other than the SIB 1;
or, at least part of SIBs having the same function and/or the same service type are selected from the at least one SIB other than the SIB 1.

Validity indications may be partially shared. If the use of an independent validity indication for a single SIB may excessively increase the capacity of the SIB 1, flexible partial sharing may be adopted. Partial sharing may be based on whether multiple SIBs may be placed in the same SI message or not, namely SIBs belonging to the same SI message may share a same validity indication. For example, referring to FIG. 3, both SIB x and SIB y may belong to SI message 1 and SIB z may belong to SI message 2. In such a case, validity indication 1 may be configured for the SIB x and the SIB y, and validity indication 2 may be allocated to the SIB z.

Other criteria, such as SI relativity, may also be adopted for partial sharing. For example, as shown in FIG. 4, if the SIB x and the SIB z are both required by the same service or related for the same function, a shared validity indication may be used, for example, the validity indication 1 shown in the figure; and the validity indication 2 may be used for the SIB y. For example, different SIBs related to MBMS and SIBs related to D2D discovery and D2D communication may share the same validity indications. Sharing a validity indication may result in that the validity indication may change with change of any SIB.

It can be seen that, a validity indication may be configured for at least one SIB with adoption of the above solution, so that a system may support a scenario that multiple SIBs may be indicated by a same validity indication and may further be adapted to a system mechanism of flexibly acquiring an SIB on demand.

### Embodiment 3

The embodiment of the disclosure provides a network device, which, as shown in FIG. 6, includes a first processing unit 61 and a communication unit 62.

The first processing unit 61 may configure a validity indication for at least one SIB.

The communication unit 62 may transmit the validity indication for an SIB to be reacquired to a terminal device.

Here, the network device in the embodiment may be a base station on a network side, which for example, may be an eNB or a gNB. Based on the above operations, the base station may configure a validity indication for one or more SIBs, so that a terminal may determine whether an SIB is required to be reacquired or not by detecting a change in the validity indication. These SIBs may be located in the same or different SI messages.

The processing unit 61 may configure one validity indication for one or more SIBs respectively, that is, a same validity indication may correspond to at least one SIB. If there are totally eight SIBs, one validity indication may be set for each SIB respectively; or one validity indication may be set for each of seven or fewer SIBs therein respectively, and moreover, a same validity indication may be adopted for part of the SIBs.

Furthermore, the validity indication may be a finite set of positive integers, for example, 1-16 or 1-32.

A change in a value of a validity indication means that a corresponding SIB is not valid anymore and is required to be reacquired by the terminal. That is, when an SIB is not valid anymore, the network side may enable the terminal device to learn about whether the corresponding SIB is required to be reacquired or not by transmitting a validity indication through a system message.

It can be understood that the embodiment further includes that validity indications configured for all SIBs are transmitted to the terminal device. In such a manner, the terminal device may have the same validity indications for corresponding SIBs with the network side and thus can learn about whether the corresponding SIBs have gotten invalid or not only by reading the validity indications.

A position of a validity indication in the embodiment is described as follows: the validity indication for the SIB to be reacquired is placed in MSI in a centralized or distributed manner and transmitted to the terminal device to instruct the terminal device to reacquire the SIB.

That is, multiple SI validity indications may be placed in the MSI in the centralized manner (the MSI includes an MIB and RMSI).

Specifically, the validity indication for the SIB to be reacquired is placed in an SIB 1 in the MSI in the centralized manner. For example, the RMSI may include the SIB 1 or SIB 2, and the validity indication may be in the SIB 1. The validity indication may also be placed in different SIBs in the distributed manner. In an example, validity indications of multiple SIBs may be placed in the SIB 1 in the centralized manner, and in such a manner, UE may learn about whether a value of a certain SIB is required to be reacquired or not by acquiring the MSI.

In addition, the operation that the validity indication is configured for the at least one SIB may further include the following manners.

Manner 1: a validity indication is configured for each of at least one SIB other than the SIB 1.

That is, a system value tag is independently defined for an SIB in a single piece of other SI. This method is flexible, but an increased capacity of the RMSI/SIB 1 may be caused. For example, if the system value tag needs five bits, eight pieces of other SI are may need 40 bits. An NR system has a capacity larger than an LTE system, 40 bits may be acceptable in the SIB 1. However, if there are more SIBs of other SI, more bits may be occupied. Therefore, other solutions are needed to be taken into consideration Referring to FIG. 2, a scenario that a validity indication corresponds to an SIB is shown in the figure.

Manner 2: at least part of SIBs are selected from the at least one SIB other than the SIB 1, and a same validity indication is configured for the at least part of SIBs.

The operation that the at least part of SIBs are selected from the at least one SIB other than the SIB 1may include the following operation:
at least part of SIBs placed in the same system message are selected from the at least one SIB other than the SIB 1;
or, at least part of SIBs having the same function and/or the same service type are selected from the at least one SIB other than the SIB 1.

Validity indications may be partially shared. For example, if the use of an independent validity indication for a single SIB may excessively increase the capacity of the SIB 1, flexible partial sharing may be adopted. Partial sharing may be based on whether multiple SIBs may be placed in the same SI message or not, namely SIBs belonging to the same SI message may share a same validity indication. For example, referring to FIG. 3, both SIB x and SIB y may belong to SI message 1 and SIB z may belong to SI message 2. In such a case, validity indication 1 may be configured for the SIB x and the SIB y, and validity indication 2 is allocated to the SIB z.

Other criteria such as SI relativity may also be adopted for partial sharing. For example, as shown in FIG. 4, if the SIB x and the SIB z are both required by the same service or related for the same function, a shared validity indication may be used, for example, the validity indication 1 shown in the figure; and the validity indication 2 may be used for the SIB y. For example, different SIBs related to MBMS and SIBs related to D2D discovery and D2D communication may share a same validity indication. Sharing a validity indication may result in that a validity indication changes with change of any SIB.

It can be seen that, a validity indication may be configured for at least one SIB with adoption of the above solution, so that a system may support a scenario that multiple SIBs may be indicated by a same validity indication and may further be adapted to a system mechanism of flexibly acquiring an SIB on demand.

### Embodiment 4

The embodiment of the disclosure provides a terminal device, which, as shown in FIG. 7, includes a detection unit 71 and a second processing unit 72.

The detection unit 71 is configured to detect a validity indication, transmitted by a network side, for an SIB to be reacquired, the validity indication being for at least one SIB.

The second processing unit 72 is configured to reacquire the SIB based on the validity indication.

Here, the network device in the embodiment may be a base station on a network side, which for example, may be an eNB or a gNB. The base station may configure a validity indication for one or more SIBs through the above operations, so that a terminal may determine whether an SIB is required to be reacquired or not by detecting a change in the validity indication. These SIBs may be located in a same or different SI messages.

Specifically, configuring the validity indication for the at least one SIB may refer to configuring one validity indication for one or more SIBs respectively, that is, a same validity indication may correspond to at least one SIB. If there are totally eight SIBs, one piece of validity indication information may be set for each SIB respectively; or one validity indication may be set for each of seven or fewer SIBs therein respectively, and moreover, a same validity indication may be adopted for part of the SIBs.

Furthermore, the validity indication may be a finite set of positive integers, for example, 1-16 or 1-32.

A change in a value of the validity indication means that a corresponding SIB is not valid anymore and is needed to be reacquired by the terminal. That is, when an SIB is not valid anymore, the network side may enable the terminal device to learn about whether the corresponding SIB is required to be reacquired or not by transmitting a validity indication through a system message.

It may be understood that the embodiment further includes that validity indications configured for all SIBs are transmitted to the terminal device. Correspondingly, the terminal device acquires the corresponding validity indications configured for all the SIBs from the network side. In such a manner, the terminal device may have the same validity indications for corresponding SIBs with the network side and thus learn about whether the corresponding SIBs have gotten invalid or not only by reading the validity indications.

A position of the validity indication in the embodiment is described as follows: the validity indication for the SIB to be reacquired is placed in MSI in a centralized or distributed manner and transmitted to the terminal device to instruct the terminal device to reacquire the SIB. Correspondingly, the terminal device detects, from the MSI, the validity indication for the SIB to be reacquired.

That is, multiple SI validity indications may be placed in the MSI in the centralized manner (the MSI includes an MIB and RMSI).

Specifically, the validity indication for the SIB to be reacquired is placed in SIB 1 in the MSI in the centralized manner. For example, the RMSI may include the SIB 1 or SIB 2, and the validity indication may be in the SIB 1. The validity indication may also be placed in different SIBs in the distributed manner. In an example, validity indications of multiple SIBs may be placed in the SIB 1 in the centralized manner, and in such a manner, UE may learn about whether a value of a certain SIB is required to be reacquired or not by acquiring the MSI.

In addition, the operation that the validity indication is configured for the at least one SIB may further include the following manners.

Manner 1: a validity indication is configured for each of at least one SIB other than the SIB 1.

That is, a system value tag is independently defined for an SIB in a single piece of other SI. This method is flexible, but a capacity of the RMSI/SIB 1 may be increased. For example, if the system value tag needs to occupy five bits, eight pieces of other SI may need to occupy 40 bits. An NR system has a capacity larger than an LTE system, 40 bits may be acceptable in the SIB 1. However, if there are more SIBs of other SI, more bits may be occupied. Therefore, other solutions need to be considered. Referring to FIG. 2, a scenario that a validity indication corresponds to an SIB is shown in the figure.

Manner 2: at least part of SIBs are selected from the at least one SIB other than the SIB 1, and a same validity indication is configured for the at least part of SIBs.

The operation that the at least part of SIBs are selected from the at least one SIB other than the SIB 1 may include the following operation:
at least part of SIBs placed in a same system message are selected from the at least one SIB other than the SIB 1;
or, at least part of SIBs having the same function and/or the same service type are selected from the at least one SIB other than the SIB 1.

Validity indications are partially shared. If the use of an independent validity indication for a single SIB may excessively increase the capacity of the SIB 1, flexible partial sharing may be adopted. Partial sharing may be based on whether multiple SIBs may be placed in a same SI message or not, namely SIBs belonging to a same SI message may share the same validity indication. For example, referring to FIG. 3, both SIB x and SIB y may belong toSI message 1 and SIB z belongs to SI message 2. In such a case, a same validity indication 1 may be configured for the SIB x and the SIB y, and validity indication 2 is allocated to the SIB z.

Other criteria, such as SI relativity, may also be adopted for partial sharing. For example, as shown in FIG. 4, if the SIB x and the SIB z are both required by the same service or related for the same function, a shared validity indication may be used, for example, the validity indication 1 shown in the figure; and the validity indication 2 may be used for the SIB y. For example, different SIBs related to MBMS and SIBs related to D2D discovery and D2D communication may share a same validity indications. Sharing a validity indication may result in that the validity indication may change with change of any SIB.

It can be seen that, the validity indication may be configured for the at least one SIB with adoption of the above solution, so that a system may support a scenario that multiple SIBs may be indicated by a same validity indication and may further be adapted to a system mechanism of flexibly acquiring an SIB on demand.

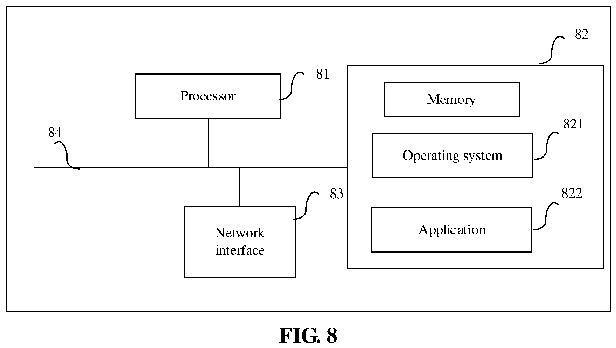

An embodiment of the disclosure also provides a hardware composition architecture of a network device or a terminal device, which, as shown in FIG. 8, includes at least one processor 81, a memory 82 and at least one network interface 83. Each component is coupled together through a bus system 84. It may be understood that the bus system 84 is configured to implement connection communication between these components. The bus system 84 includes a data bus and further includes a power bus, a control bus and a state signal bus. However, for clear description, various buses in FIG. 8 are marked as the bus system 84.

It may be understood that the memory 82 in the embodiment of the disclosure may be a volatile memory or a nonvolatile memory, or may include both the volatile and nonvolatile memories.

In some modes, the memory 82 stores elements, executable modules or data structures, or a subset thereof or an extended set thereof as follows:
an operating system 821 and an application 822.

Herein, the processor 81 is configured to be capable of processing the operations of the method in embodiment 1 or 2, which will not be elaborated herein.

An embodiment of the disclosure provides a computer storage medium, which have stored a computer-executable instruction, the computer-executable instruction being executed to implement the operations of the method in embodiment 1 or 2.

When being implemented by software functional modules and sold or used as an independent product, the device of the embodiment of the disclosure may also be stored in a computer-readable storage medium. Based on such an understanding, the technical solutions of the embodiments of the disclosure substantially or the parts making contributions to the conventional art may be embodied by a software product, and the computer software product is stored in a storage medium, including a plurality of instructions for enabling a computer device (which may be a personal computer, a server, a network device or the like) to execute all or part of the method in each embodiment of the disclosure. The storage medium includes: various media capable of storing program codes such as a U disk, a mobile hard disk, a Read Only Memory (ROM), a magnetic disk or an optical disk. Therefore, the embodiments of the disclosure are not limited to any specific hardware and software combination.

Correspondingly, the embodiments of the disclosure also provide a computer storage medium, in which a computer program is stored, the computer program being configured to execute the data scheduling method of the embodiments of the disclosure.

Although the preferred embodiments of the disclosure have been disclosed for the exemplary purposes, those skilled in the art may realize that it is also possible to make various improvements, additions and replacements. Therefore, the scope of the disclosure should not be limited to the above-mentioned embodiments.

## Claims

1. A method for indicating validity of System Information (SI), applied to a network device and comprising:
configuring a validity indication for at least one SI Block (SIB); and
transmitting the validity indication for an SIB to be reacquired to a terminal device.

2. The method of claim 1, wherein transmitting the validity indication for the SIB to be reacquired to the terminal device further comprises:
placing the validity indication for the SIB to be reacquired in Minimum SI (MSI) in a centralized or distributed manner; and
transmitting the validity indication for the SIB to the terminal device.

3. The method of claim 2, further comprising:
placing the validity indication for the SIB to be reacquired in SIB 1 in the MSI in the centralized manner.

4. The method of any one of claims 1-3, wherein configuring the validity indication for the at least one SIB further comprises:
configuring one validity indication for each of the at least one SIB other than the SIB 1 respectively.

5. The method of any one of claims 1-3, wherein configuring the validity indication for the at least one SIB further comprises:
selecting at least part of SIBs from the at least one SIB other than SIB 1; and
configuring a same validity indication for the at least part of SIBs.

6. The method of claim 5, wherein selecting the at least part of SIBs from the at least one SIB other than the SIB 1 comprises:
selecting at least part of SIBs placed in a same system message from the at least one SIB other than the SIB 1.

7. The method of claim 5, wherein selecting the at least part of SIBs from the at least one SIB other than the SIB 1 comprises:
selecting at least part of SIBs having a same function and/or a same service type from the at least one SIB other than the SIB 1.

8. The method of claim 1, further comprising:
transmitting validity indications configured for all SIBs to the terminal device.

9. A method for indicating validity of System Information (SI), applied to a terminal device and comprising:
detecting a validity indication, transmitted by a network side, for a SI Block (SIB) to be reacquired, the validity indication being for at least one SIB; and
reacquiring the SIB based on the validity indication.

10. The method of claim 9, further comprising:
acquiring validity indications configured for all SIBs from the network side.

11. The method of claim 9, further comprising:
detecting the validity indication for the SIB to be reacquired from Minimum SI (MSI).

12. A network device, comprising:
a first processing unit, configured to configure a validity indication for at least one System Information Block (SIB); and
a communication unit, configured to transmit the validity indication for an SIB to be reacquired to a terminal device.

13. The network device of claim 12, wherein the first processing unit is configured to place the validity indication for the SIB to be reacquired in Minimum SI (MSI) in a centralized or distributed manner.

14. The network device of claim 13, wherein the first processing unit is configured to place the validity indication for the SIB to be reacquired in SIB 1 in the MSI in the centralized manner.

15. The network device of any one of claims 12-14, wherein the first processing unit is configured to configure one validity indication for each of the at least one SIB other than the SIB 1 respectively.

16. The network device of any one of claims 12-14, wherein the first processing unit is configured to:
select at least part of SIBs from the at least one SIB other than SIB 1; and
configure a same validity indication for the at least part of SIBs.

17. The network device of claim 16, wherein the first processing unit is configured to select at least part of SIBs placed in a same system message from the at least one SIB other than the SIB 1.

18. The network device of claim 16, wherein the first processing unit is configured to select at least part of SIBs having a same function and/or a same service type from the at least one SIB other than the SIB 1.

19. The network device of claim 12, wherein the first processing unit is configured to transmit, through the communication unit, validity indications for all SIBs to the terminal device.

20. A terminal device, comprising:
a detection unit, configured to detect a validity indication, transmitted by a network side, for a System Information Block (SIB) to be reacquired, the validity indication being for at least one SIB; and
a second processing unit, configured to reacquire the SIB according to the validity indication.

21. The terminal device of claim 20, wherein the detection unit is configured to acquire validity indications configured for all SIBs from the network side.

22. The terminal device of claim 21, wherein the detection unit is configured to detect the validity indication for the SIB to be reacquired from Minimum SI (MSI).

23. A network device, comprising a processor and a memory configured to store a computer program capable of running in the processor,
wherein the processor is configured to run the computer program to execute the steps of the method of any one of claims 1-8.

24. A terminal device, comprising a processor and a memory configured to store a computer program capable of running in the processor,
wherein the processor is configured to run the computer program to execute the steps of the method of any one of claims 9-11.

25. A computer storage medium, storing a computer-executable instruction, the computer-executable instruction being executed to implement the steps of the method of any one of claims 1-11.
